(19) Europäisches Patentamt

European Patent Office

Office européen des brevets

(11) EP 1 551 032 A1

(12) **EUROPEAN PATENT APPLICATION**
published in accordance with Art. 158(3) EPC

(43) Date of publication:
06.07.2005 Bulletin 2005/27

(21) Application number: 03751469.2

(22) Date of filing: 10.10.2003

(51) Int Cl.⁷: **G21B 1/00**, C01B 3/00,
B01J 20/06

(86) International application number:
PCT/JP2003/013095

(87) International publication number:
WO 2004/034406 (22.04.2004 Gazette 2004/17)

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **11.10.2002 JP 2002334375**

(72) Inventor: **ARATA, Yoshiaki**
**Kobe-shi, Hyogo 658-0057 (JP)**

(74) Representative: **Marx, Lothar, Dr.**
**Patentanwälte Schwabe, Sandmair, Marx
Stuntzstrasse 16
81677 München (DE)**

(71) Applicant: **Osaka Industrial Promotion
Organization
Osaka-shi, Osaka 540-0029 (JP)**

(54) **HYDROGEN CONDENSATE AND METHOD OF GENERATING HEAT THEREWITH**

(57) The present invention provides a method of generating heat using a hydrogen condensate. The hydrogen condensate comprises a plurality of metal atoms contained in a metal nano-ultrafine particle and a plurality of hydrogen isotope atoms solid-dissolved among the plurality of metal atoms. At least two of the plurality of hydrogen isotope atoms are condensed so that the inter-atomic nuclear distance between two hydrogen isotope atoms is smaller than or equal to the internuclear spacing of a molecule consisting of two hydrogen isotope atoms. The heat generation method comprises applying energy to the hydrogen condensate and generating heat by causing the at least two hydrogen isotope atoms to react with each other due to the energy.

**FIG.1**

○ 20-face site

● 14-face site

100

## Description

### TECHNICAL FIELD

The present Invention relates to a hydrogen condensate such that a plurality of hydrogen isotope atoms are solid-dissolved among a plurality of metal atoms, and a method of generating heat using the hydrogen condensate.

The present invention makes it possible to produce new energy which is safe and whose resource is guaranteed to be inexhaustible and which is therefore desired by the human race, and helium gas which is useful and whose abundance is very small. Further, the present invention provides an immeasurable contribution to development of new science and technology in a wide variety of fields, such as energy science and technology, material science and technology, refrigerant technology, aeronautical engineering and the like, and further, any activities for the continuation of the human race, and the conservation of the Earth's environment.

### BACKGROUND ART

Conventional energy sources include fossil fuels, water power, nuclear energy, wind power, hydrogen, solar light, and the like. However, when these energy sources are used, serious problems inevitably arise, including exhaustion of resources, environmental destruction, inefficiency and the like. Therefore, there are concerns over the use of these energy sources for the future . On the other hand, ultrahigh temperature nuclear fusion has been proposed as a new energy source, however, its practical use is still distant.

Recently, methods of utilizing electrolysis using palladium electrodes (Pd) have been developed as an energy source. However, for most of them, there are doubts about the possibility of the practical use as an energy source.

For example, a method of utilizing a Double Structure (DS) cathode, with which the present inventors attained the only success, has a poor level of heat generation efficiency, and its industrialization was actually impossible (see Yoshiaki Arata, M. J. A, and Yue-Chang Zhang, Formation of condensed metallic deuterium lattice and nuclear fusion, Proceedings of the Japan Academy, the Japan Academy, March 28, 2002, Vol. 78, Ser. B, No. 3, p. 57-62).

The DS-cathode used in the above-described method is, for example, a DS-cathode using Pd black ultrafine particles (see WO95/35574) or a DS-cathode using metal nanoparticles (see Japanese Laid-Open Publication No. 2002-105609).

Further, the present inventors made an attempt to apply ultrasonic energy to a bulk (metal bulk) or a foil (metal foil) implanted with deuterium oxide ($D_2O$) to generate heat. However, the efficiency of the heat generation is poor, so that there are doubts about the industrialization of this technique (see Yoshiaki Arata, M. J. A. , and Yue-Chang Zhang, Nuclear fusion reacted inside metals by intense sonoplantation effect, Proceedings of the Japan Academy, the Japan Academy, March 28, 2002, Vol. 78, Ser. B, No. 3, p. 63-68).

The present invention is provided to solve the above-described problems. An object of the present invention is to provide: (1) a hydrogen condensate in which a larger quantity of hydrogen isotope atoms are solid-dissolved among metal atoms than in conventional techniques; and (2) a method of generating heat using the hydrogen condensate.

### DISCLOSURE OF THE INVENTION

The present invention was completed based on the finding that the hydrogen condensate of the present invention has a function or behavior different from conventional bulk (metal bulk) or foil (metal foil) and is useful as a material for a nuclear fusion reaction. In other words, the present invention was completed by novel and innovative exploration, selection and combination of various conditions using the hydrogen condensate of the present invention, but not modification of conditions for conventional bulk or foil.

The present inventors disproved a conventional established theory after we had keenly and diligently studied for over half a century. According to the conventional established theory, when deuterium is solid-dissolved in palladium particles, which are known to be the best to solid-dissolve hydrogen, the number of deuterium atoms/the number of palladium atoms is 70 to 80% and cannot exceed 100%. To our surprise, we achieved a pressurizing effect corresponding to several hundred millions of atmospheric pressure to hydrogen gas by applying a practical level of pressure (about 0.3 to about 100 atmospheric pressure), and utilized a hydrogen condensate which was produced under a practical level of pressure for a nuclear fusion reaction. The present invention was completed based on our achievements and perspectives. Energy which is generated using the heat generation method of the present invention is referred to as "ARATA ENERGY".

A method of the present invention is a method of generating heat using a hydrogen condensate. The hydrogen condensate comprises a metal nano-ultrafine particle containing a plurality of metal atoms and a plurality of hydrogen isotope atoms solid-dissolved among the plurality of metal atoms, and at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms. The heat generation method comprises applying energy to the hydrogen condensate, and generating heat by causing the at least two hydrogen isotope atoms to react with each other due to the energy. Thereby, the above-described object is achieved.

The plurality of metal atoms may be metal atoms of at least one species selected from the group consisting of palladium, titanium, zirconium, silver, iron, nickel, copper, and zinc.

Another method of the present invention is a method of generating heat using a hydrogen condensate. The hydrogen condensate comprises a metal alloy composite containing a plurality of metal atoms and a plurality of hydrogen isotope atoms solid-dissolved among the plurality of metal atoms, and at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms. The heat generation method comprises applying energy to the hydrogen condensate, and generating heat by causing the at least two hydrogen isotope atoms to react with each other due to the energy. Thereby, the above-described object is achieved.

The energy may be generated based on at least one of ultrasonic wave, strong magnetic field, high pressure, laser, laser explosive flux-compression, high-density electron beam, high-density current, discharge, and chemical reaction.

In the step of generating heat, the at least two hydrogen isotope atoms are reacted with each other to generate a helium molecule in addition to the heat.

A hydrogen condensate of the present invention comprises a metal nano-ultrafine particle containing a plurality of metal atoms, and a plurality of hydrogen isotope atoms solid-dissolved among the plurality of metal atoms. At least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms. Thereby, the above-described object is achieved.

The plurality of metal atoms may be metal atoms of at least one species selected from the group consisting of palladium, titanium, zirconium, silver, iron, nickel, copper, and zinc.

Another hydrogen condensate of the present invention comprises a metal alloy composite containing a plurality of metal atoms, and a plurality of hydrogen isotope atoms solid-dissolved among the plurality of metal atoms. At least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms. Thereby, the above-described object is achieved.

## BRIEF DESCRIPTION OF THE DRAWINGS

Figure **1** is a diagram schematically showing an exemplary structure of a hydrogen condensate **100**.

Figure **2** is a diagram showing an exemplary structure of a heat generation apparatus **200**.

Figure **3** is a diagram showing changes over time in heat generated by solid-dissolving a mixture gas of deuterium gas and helium gas into a $ZrO_2 \cdot Pd$ particle, and changes over time in the internal pressure of a reaction furnace **201.**

Figure **4** is a diagram showing comparison between heat generation before applying an ultrasonic wave to the ultrahigh-density deuterated nanoparticle and heat generation during application of ultrasonic wave.

Figure **5** is a diagram showing comparison of an ultrahigh-density deuterated nanoparticle sample produced by solid-dissolving deuterium atoms into a $ZrO_2 \cdot Pd$ particle between before and after applying the ultrasonic wave to the sample (before and after a nuclear fusion reaction).

Figure **6A** is a diagram showing the result of analysis of gas generated when the ultrasonic wave was applied to an ultrahigh-density deuterated nanoparticle produced by solid-dissolving deuterium atoms into a $ZrO_2 \cdot Pd$ particle (during a nuclear fusion reaction).

Figure **6B** is a diagram showing the result of analysis of gas generated after the ultrasonic wave was applied to a ultrahigh-density deuterated nanoparticle produced by solid-dissolving deuterium atoms into a $ZrO_2 \cdot Pd$ particle (after a nuclear fusion reaction).

Figure **6C** is a diagram showing spectra of M4.

Figure **7** is a diagram schematically showing an exemplary structure of a hydrogen condensate **300.**

Figure **8** is a diagram showing changes over time in heat generated by solid-dissolving deuterium gas into a $Zr_3NiO \cdot Pd$ particle, and changes over time in the internal pressure of the reaction furnace **201.**

Figure **9** is a diagram showing that it is more difficult for deuterium atoms to be solid-dissolved in a $Zr_3NiO \cdot Pd$ particle when a mixture gas of deuterium gas and helium gas is used than when deuterium gas is used.

Figure **10** is a diagram showing the result of analysis of gas generated when the ultrasonic wave was applied to a deuterium condensate produced by solid-dissolving deuterium atoms into a $Zr_3NiO \cdot Pd$ particle (during a nuclear fusion reaction).

Figure **11** is a diagram showing that the quantity of helium generated by applying the ultrasonic wave to a deuterium condensate produced by solid-dissolving deuterium atoms into a $Zr_3NiO \cdot Pd$ particle is larger than the quantity of helium generated by applying the ultrasonic wave to a deuterium condensate produced by solid-dissolving deuterium atoms into a $ZrO_2 \cdot Pd$ particle.

BEST MODE FOR CARRYING OUT THE INVENTION

(Definition of terms)

Hereinafter, terms used herein will be defined.
"Metal nano-ultrafine particle": a metal nano-ultrafine particle means both "a metal nano-ultrafine particle and a group thereof" and "a surface layer corresponding to two-dimensional metal nano-ultrafine particles".
The metal nano-ultrafine particle (spherical shape) and the surface layer (circular shape) corresponding to two-dimensional metal nano-ultrafine particles have an average diameter which is calculated from a lattice size composed of at least **13** metal atoms. The average diameter is 5 nm at the maximum when the metal nano-ultrafine particles are buried, and **15** nm at the maximum when the metal nano-ultrafine particles are isolated. The metal nano-ultrafine particles include at least one metal selected from the group consisting of metals, such as palladium, titanium, zirconium, silver and the like. Note that, when the metal nano-ultrafine particles include two or more metals, they can be used in the form of mixture or coexistence or in the form of alloy in which these metal atoms are mixed or coexist.
When material is repeatedly subdivided into a certain critical size or less, the properties of the material suddenly change (Materials Transaction, JIM, Vol. 35, No. 9, pp. 563-575, 1994). Such a sudden change in material properties is recognized as a phenomenon that elasticity emerges in the bond between atoms of the material. For example, in the case of a lattice composed of four atoms, the phenomenon appears as if a non-elastic wooden lattice changes to a spring lattice. In the present invention, a metal particle or a metal crystal lattice and a metal surface layer whose physical properties are suddenly changed due to ultrafine subdivision are used as a material which is significantly effective for production of an ultrahigh-density deuterated nanoparticle (i.e., the above-described metal nano-ultrafine particle or surface layer corresponding to two-dimensional metal nano-ultrafine particles).
The metal nano-ultrafine particle can be produced using a method of oxidizing an amorphous alloy. For example, $ZrO_2 \cdot Pd$ having an average diameter of about 5 nm can be produced by oxidizing an amorphous alloy $Zr_{65} \cdot Pd_{35}$. The details of the method are described in Japanese Laid-Open Publication No. 2002-105609. Alternatively, the metal nano-ultrafine particle can be prepared using a vapor deposition method. The details of the method are described in "Materials Transaction, JIM, Vol. 35" (described above).
The metal nano-ultrafine particles may be buried in a support in a state that allows the particles to be separated from one another without contacting one another ("buried type" particles), or may be distributed in a liquid, a gas, a substrate or the like in a state that allows the particles to be separated from one another without contacting one another ("isolated type" particles).
The "buried type" particle has an average diameter in the range from a lattice size composed of at least 13 metal atoms to a maximum of 5 nm. The "isolated type" particle has an average diameter in the range from a lattice size composed of at least 13 metal atoms to a maximum of 15 nm. Note that the metal nano-ultrafine particle and the surface layer corresponding to the two-dimensional metal nano-ultrafine particles can be provided or commercialized singly as a material for a nuclear fusion reaction.
"Ultrahigh-density deuterated nanoparticle": an ultrahigh-density deuterated nanoparticle means both "an ultrahigh-density deuterated nanoparticle and a group thereof" and "an ultrahigh-density deuterated surface layer corresponding to two-dimensional ultrahigh-density deuterated nanoparticles". By using the ultrahigh-density deuterated nanoparticle and the surface layer corresponding to two-dimensional ultrahigh-density deuterated nanoparticles as hosts, it is possible to solid-dissolve deuterium atoms to an atom number ratio (the number of deuterium atoms/metal atoms) of 200% or more. In the present invention, for example, deuterium is caused to be absorbed into a buried-type metal nano-ultrafine particle having an average diameter of 5 nm or less under pressure. When the pressure is 10 atmospheric pressure or less, deuterium atoms can be solid-dissolved to an atom number ratio of 250% or more. When the pressure is 100 atmospheric pressure, deuterium atoms can be solid-dissolved to an atom number ratio of about 300%. Thus, an ultrahigh-density deuterium condensate can be formed, in which deuterium atoms are localized in the metal crystal lattice. As a result, an ultrahigh-density deuterated nanoparticle can be obtained. The formation of the deuterium condensate is performed in order to reduce the nuclear distance between two deuterium atoms to 0.6 A or less which permits nuclear fusion. In this case, it is roughly estimated that the deuterium condensate has a pressurizing effect corresponding to deuterium gas to which several hundred millions of atmospheric pressure is applied (exactly speaking, in the case of an atom number ratio of 400%).

Commercially available deuterium can be used. The ultrahigh-density deuterated nanoparticle and a group thereof and the ultrahigh-density deuterated surface layer corresponding to the two-dimensional metal nano-ultrafine particles can be provided or commercialized singly as a material for a nuclear fusion reaction.

"Energy": energy means both impact energy and stationary energy. A means or an energy source which applies load energy to the ultrahigh-density deuterated nanoparticle and a group thereof and the ultrahigh-density deuterated surface layer corresponding to the two-dimensional metal nano-ultrafine particles, includes ultrasonic wave, strong magnetic field, high pressure, laser, laser explosive flux-compression, high-density electron beam, high-density current, discharge, chemical reaction, and the like. These energies can be used singly or in combination. Note that, when ultrasonic wave is used, a transfer medium for transferring the energy to a nuclear fusion reaction material is required, such as, for example, $D_2O$ (commercially available), $H_2O$ or the like. The energy to be applied needs to have intensity or quantity which can induce or cause a nuclear fusion reaction, such as 300 Watt and 19 kHz for an ultrasonic wave.

Hereinafter, embodiments of the present invention will be described with reference to the accompanying drawings.

1. Structure of hydrogen condensate 100

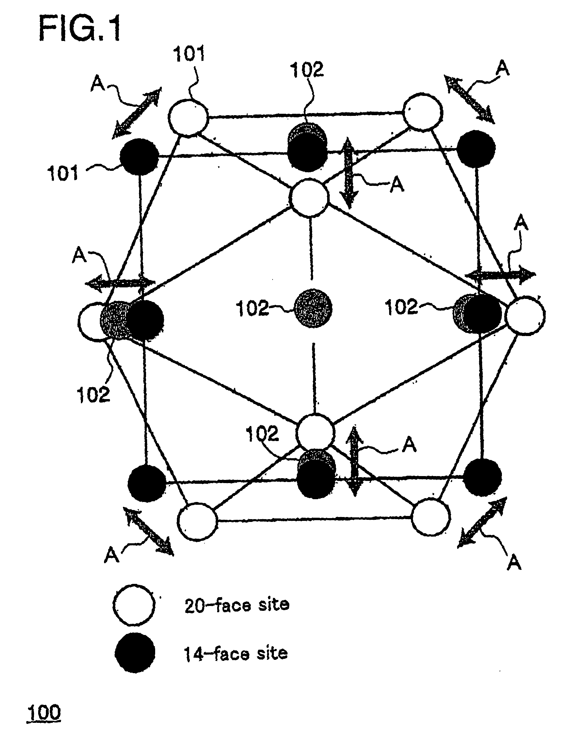

Figure **1** schematically shows an exemplary structure of a hydrogen condensate **100.**

The hydrogen condensate **100** comprises a metal nano-ultrafine particle (host) and a plurality of hydrogen isotope atoms (guests) **102** which are solid-dissolved in a plurality of metal atoms **101** contained in the metal nano-ultrafine particle.

A larger quantity of hydrogen isotope atoms can be dissolved in the metal nano-ultrafine particle than in a metal particle (bulk metal particle) which is larger than the metal nano-ultrafine particle. This is because the bond between metal atoms in the metal nano-ultrafine particle is more elastic than the bond between metal atoms in the bulk metal particle, and therefore, a pressure applied to the metal nano-ultrafine particle and the hydrogen isotope atom in order to solid-dissolve the hydrogen isotope atom is lower than a pressure applied to the bulk metal particle and the hydrogen isotope atom in order to solid-dissolve the hydrogen isotope atom.

In Figure **1**, an open circle indicates a 20-facesite of a metal atom, a closed circle indicates a 14-face site, and arrow **A** indicates elasticity of the bond between metal atoms in the metal nano-ultrafine particle.

Thus, the phenomenon that the bond between metal atoms in the metal nano-ultrafine particle has elasticity is based on the principle that when a material is subdivided into its specific critical size or less, a physical property thereof changes suddenly, so that elasticity emerges in the bond between atoms.

By using the above-described metal nano-ultrafine particle as a host, it is possible to cause hydrogen isotope atoms to be included in the hydrogen condensate to an atom number ratio (the number of hydrogen isotope atoms/the number of metal atoms) of 200% or more.

The quantity of hydrogen isotope atoms which can be contained in the hydrogen condensate depends on the magnitude of pressure applied to the metal nano-ultrafine particle and the hydrogen isotope atoms. For example, when the applied pressure is 10 times atmospheric pressure, hydrogen isotope atoms can be solid-dissolved in the metal nano-ultrafine particle to an atom number ratio of 250% or more. When the applied pressure is 100 times atmospheric pressure, hydrogen isotope atoms can be solid-dissolved in the metal nano-ultrafine particle to an atom number ratio of 300% or more. The plurality of hydrogen isotope atoms solid-dissolved in the metal nano-ultrafine particle exist as hydrogen condensates (local condensates) condensed in a metal lattice of the metal nano-ultrafine particle.

As described above, a larger number of hydrogen isotope atoms per unit particle can be solid-dissolved in the metal nano-ultrafine particle than in bulk metal particles. Therefore, the distance between hydrogen isotope atoms solid-dissolved in the metal nano-ultrafine particle is smaller than the distance between hydrogen isotope atoms solid-dissolved in the bulk metal particle. As a result, it is possible to apply a lower level of energy to the hydrogen condensate to react the hydrogen isotope atoms than that to a particle comprising a bulk metal particle and a plurality of hydrogen isotope atoms.

The hydrogen condensate needs to contain at least two hydrogen isotope atoms. This is because the two hydrogen isotope atoms are caused to react with each other. A combination of the two hydrogen isotope atoms which react with each other in the hydrogen condensate may be a combination of the same hydrogen isotope atoms or of different hydrogen isotope atoms. The at least two hydrogen isotope atoms contained in the hydrogen condensate are condensed so that the inter-atomic nuclear distance between the two hydrogen isotope atoms is smaller than or equal to the internuclear spacing of a molecule consisting of the two hydrogen isotope atoms. As the number of hydrogen isotope atoms contained in the hydrogen condensate is increased, the hydrogen condensate is more useful as a fuel for a nuclear fusion reaction.

1.1 Guest of hydrogen condensate

Combinations of two hydrogen isotope atoms which are usable as guests of hydrogen condensate are, for example, a combination of a deuterium atom (D) and a deuterium atom (D), a combination of a deuterium atom (D) and a tritium atom (T), a combination of a deuterium atom (D) and a hydrogen atom (H), a combination of a tritium atom (T) and a hydrogen atom (H), and a combination of a tritium atom (T) and a tritium atom (T). In consideration of the cost efficiency, ease of control, safety and cleanliness of the nuclear fusion reaction, the order of preference is the combination of a deuterium atom (D) and a deuterium atom (D), the combination of a deuterium atom (D) and a hydrogen atom (H), the combination of a tritium atom (T) and a hydrogen atom (H), and the combination of a deuterium atom (D) and a tritium atom (T). The combination of a deuterium atom (D) and a deuterium atom (D) is especially recommendable.

The atom number ratios of deuterium atom (D) / hydrogen atom (H), tritium atom (T)/ hydrogen atom (H) and deuterium atom (D)/ tritium atom (T) are arbitrarily determined. Two or more of the above-mentioned combinations of atoms contained in a hydrogen condensate may coexist, may exist in a mixed state, or may be mixed.

A hydrogen condensate is formed by aggregating or condensating hydrogen isotope atoms on a surface layer or in the inside of the host described below. In order to attain the aggregation or condensation, the two isotope atoms need to be aggregated such that the inter-atomic nuclear distance between the two isotope atoms contained in the host is within the internuclear spacing of a molecule consisting of the two hydrogen isotope atoms (e.g., $D_2$, DH, TH, DT, etc.). Specifically, for example, when a plurality of hydrogen isotope atoms are contained in a hydrogen condensate, the deuterium atoms need to be packed, captured and adjusted in the host such that the distance between two atoms of D-D, the distance between three atoms of D-D-D, and the distance between four atoms of D-D-D-D are each within the internuclear spacing of a D molecule ($D_2$) (e.g., 0.074 nm or less).

### 1.2 Host of hydrogen condensate

The host is used as a vessel or capsule for capturing and adjusting or forcibly packing the combinations of two or more hydrogen isotopes within the internuclear spacing of the molecule. The space or room which is retained on a surface layer or in the inside of the host as the capsule is preferably of the nanometer order (e. g., the average diameter of the space regarded as the sphere is preferably about 0.002 to about 200 nm, or preferably about 0.005 to about 50 nm). The number of captured hydrogen isotopes/hydrogen condensate needs to be at least two. It is considered that as the number of captured hydrogen isotopes is larger, the performance or efficiency of the hydrogen condensate as a fuel for nuclear fusion reaction is higher. It is desirable that the outer wall of the above-mentioned capsule or vessel as the host is elastic at the atomic or molecular level.

### 1.3 Atomic structure as host

Atomic structures which are nano-order ultrafine particles obtained by subdividing metal crystals in the form of lattice and have an average diameter in the range of one lattice unit size to a maximum of 50 nm are usable as hosts. Metal host candidates are, for example, known metals forming known lattice crystals, such as body centered cubic lattice, face-centered cubic lattice, hexagonal close-packed structure and the like (e.g., palladium, titanium, zirconium, silver, iron, nickel, copper, zinc, etc.), and a combination of two or more of these metals.

### 1.4 Molecular structure as host

Inorganic compounds and aggregations thereof or crystal structures which have a shape of lattice, cube, rectangular parallelepiped, quadrangular column, hexagonal column, honeycomb, other polygonal columns, cylinder, tube, sphere, polymorphism, amorphous or the like as a shape of a unit as a vessel or capsule for capturing and adjusting hydrogen isotope atoms are usable as hosts. For example, aggregations or crystal structures of oxides and hydroxides of tin, zinc, iron, zirconium, titanium and the like, and carbon nanotube and the like are host candidates.

Single-stranded, double-stranded, or branched polymeric organic compounds having such a length that can capture and adjust the above-mentioned combinations of hydrogen isotopes (e.g., D and D, D and H, T and H, D and T, etc.) as host by winding are host candidates (e.g., protein, DNA, RNA, starch, polymeric hydrocarbon, derivatives thereof, polymeric compounds for synthetic fibers, etc.), for example. Single-stranded, double-stranded, or branched polymeric organic compounds having such a space or room that can capture and adjust the guest material by burying it in a surface layer or in the inside thereof having a primary, secondary or tertiary structure are host candidates, for example. Organic compounds (e.g., cyclodextrin, fullerene, etc.) which can capture and adjust the guest material in a surface layer or in the inside thereof having a cylindrical or spherical molecular structure in the inside or in a surface layer thereof are host candidates, for example.

### 1.5 Preparation of hydrogen condensate

Air existing in the host material is removed by vacuum and/or heating, and then a guest is added to the host material to cause them to coexist or mix them. Then, the resultant material is allowed to stand and/or lowered in temperature such that it is not frozen, and pressurized under 10 to 100 atmospheric pressure. Thus, the guest is captured or solid-dissolved into the host, whereby a hydrogen condensate can be formed.

1.6 Form of hydrogen condensate provided

The hydrogen condensate can be commercialized in the form of a solid, such as film, powder, capsule or the like, or a liquid.

2. Method of generating heat using hydrogen condensate 100

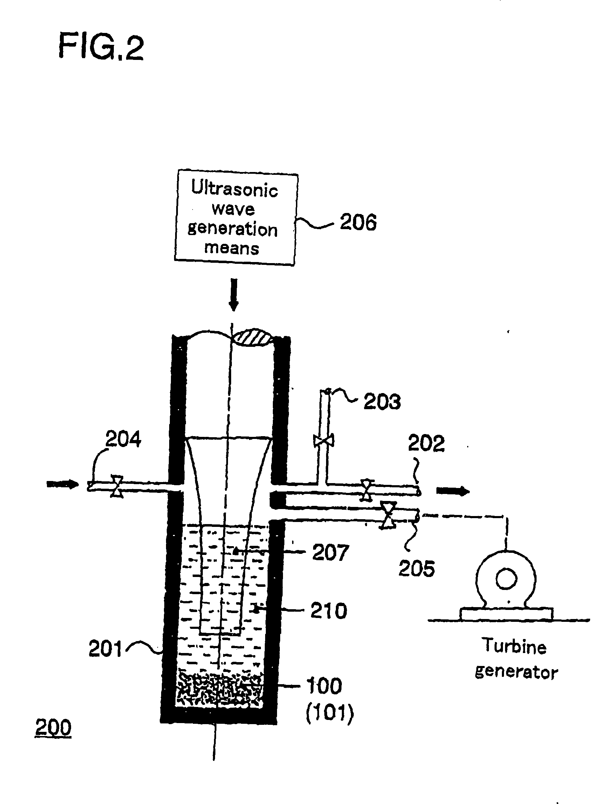

Figure **2** shows an exemplary structure of a heat generation apparatus **200.** The heat generation apparatus **200** is used to produce the hydrogen condensate **100** by solid-dissolving hydrogen isotope atoms **102** among a plurality of metal atoms **101** contained in a metal nano-ultrafine particle. The heat generation apparatus. **200** is also used to generate heat using the hydrogen condensate **100**.

The heat generation apparatus **200** comprises a reaction furnace **201,** a vacuum exhaust port **202,** a gas injection port **203** for injecting hydrogen isotope gas, a transfer medium injection port **204,** a gas outlet **205,** an ultrasonic wave generation means **206,** and an ultrasonic vibrator **207.** The heat generation apparatus **200** can be applied to power generation means, battery, heating a room, cooling a room and the like, and can be implemented as a small-size apparatus or a portable apparatus for these applications, which cannot be practically used in conventional technology.

The reaction furnace **201** accommodates the hydrogen condensate **100.** Air is exhausted via the vacuum exhaust port **202** from the reaction furnace **201.** A medium ($D_2O$, $H_2O$, etc.) for transferring ultrasonic wave to the hydrogen condensate **100** is injected via the transfer medium injection port **204.** High-temperature and high-pressure gas and helium gas are removed via the gas outlet **205.** The ultrasonic generation means **206** generates an ultrasonic wave. The ultrasonic wave vibrator **207** transfers the ultrasonic wave to the ultrasonic wave transfer medium.

In the example of Figure **2,** ultrasonic wave energy is applied to the hydrogen condensate **100.** The energy causes at least two of a plurality of deuterium atoms solid-dissolved in the hydrogen condensate **100** to react with each other, thereby making it possible to generate heat and helium gas.

Note that the energy applied to the hydrogen condensate **100** is not limited to the ultrasonic wave energy. Examples of the energy applied to the hydrogen condensate **100** include any impact energy and any stationary energy. For example, the energy applied to the hydrogen condensate **100** may be energy which is generated based on at least one of ultrasonic wave, strong magnetic field, high pressure, laser, laser explosive flux-compression, high-density electron beam, high-density current, discharge, and chemical reaction. Two or more of these energies may be used in combination.

Note that the structure of the heat generation apparatus **200** is not limited to that shown in Figure **2.**

Figure **2** only illustrates an exemplary structure of the heat generation apparatus **200.** An apparatus having any arbitrary structure can be used instead of the heat generation apparatus **200** as long as it can achieve a function equivalent to that of the heat generation apparatus **200.** The heat generation apparatus **200** may function as an apparatus for generating heat using a nuclear fusion reaction material. In this case, the heat generation apparatus **200** preferably comprises a nuclear fusion reaction furnace which accommodates a nuclear fusion reaction material, a means of controlling a nuclear fusion reaction, a means of applying impact energy and/or stationary energy to the nuclear fusion reaction material to induce or cause a nuclear fusion reaction, a means of removing generated heat, and a means of collecting generated helium. Each means included in the heat generation apparatus **200** can be added or omitted as required and as appropriate.

<Example 1>

A buried-type metal nano-ultrafine particle ($ZrO_2 \cdot Pd$ particle) was produced by using zirconia ($ZrO_2$) as a support and burying $ZrO_2 \cdot Pd$ having an average diameter of about 5 nm into the support. The metal nano-ultrafine particle ($ZrO_2 \cdot Pd$ particle) was placed in the reaction furnace **201,** and thereafter, deuterium gas ($D_2$ gas) was injected into the reaction furnace **201.** A pressure was applied to the metal nano-ultrafine particle ($ZrO_2 \cdot Pd$ particle) and the deuterium gas ($D_2$ gas) to cause the metal nano-ultrafine particle ($ZrO_2 \cdot Pd$ particle) to absorb deuterium atoms, thereby preparing a nuclear fusion reaction material (ultrahigh-density deuterated nanoparticle). Thereafter, impact energy created by activating the ultrasonic wave vibrator **207** was applied via an ultrasonic wave transfer medium ($D_2O$) to the ultrahigh-density deuterated nanoparticle, thereby causing a nuclear fusion reaction.

Hereinafter, a procedure for operating the heat generation apparatus **200** will be described.

Operation I: a $ZrO_2 \cdot Pd$ particle (3.5 g) was accommodated in the reaction furnace **201.** The reaction furnace **201** was evacuated to a high level of vacuum ($10^{-7}$ Torr) by heating the reaction furnace **201** at 150°C while removing air via the vacuum exhaust port **202.**

Operation II: deuterium gas ($D_2$ gas) was injected via the gas injection port **203** into the reaction furnace **201.** The injection of deuterium gas ($D_2$ gas) was performed at a constant rate (20 cc/min). The internal pressure of the reaction furnace **201** was set to be about 10 times atmospheric pressure so that deuterium atoms were solid-dissolved into the $ZrO_2 \cdot Pd$ particle and a condensate was formed. As a result, an ultrahigh-density deuterated nanoparticle having an atom number ratio of 250% or more was obtained. Note that the quantity of solid-dissolved atoms was calculated based on the flow rate of the injected gas and a time required for the gas pressure in the reaction furnace to be increased.

The deuterium gas is solid-dissolved into the ultrahigh-density deuterated nanoparticle in the form of deuterium atoms, but not in the form of deuterium molecules.

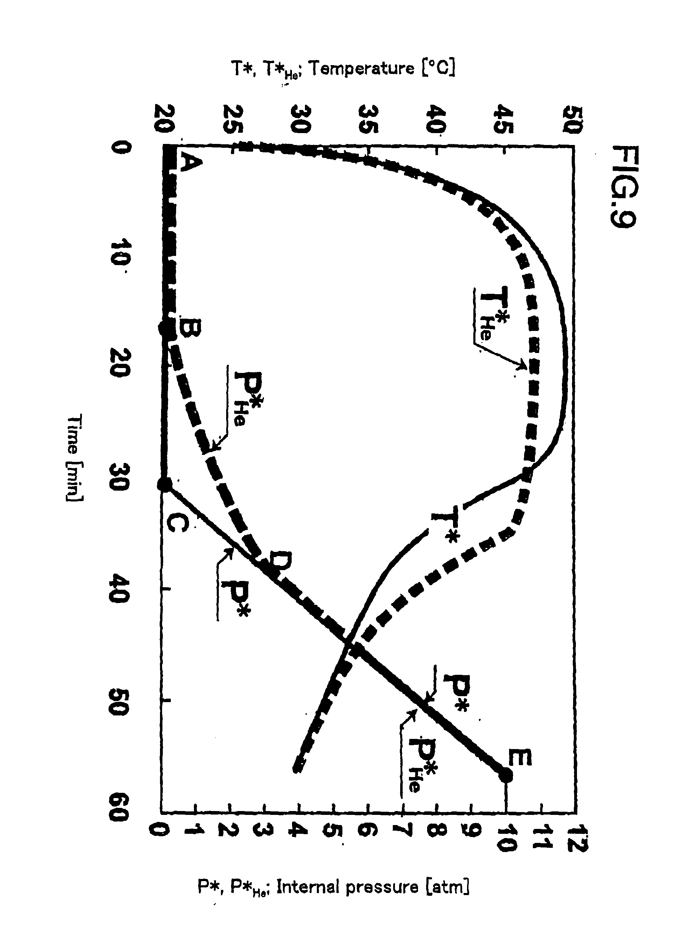

Note that the gas injected via the gas injection port **203** is not limited to deuterium gas. A mixture of deuterium gas and gas of another hydrogen isotope (e. g., $H_2$ gas) maybe injected. A mixture of gas of a hydrogen isotope and gas of another hydrogen isotope may be injected. A mixture of deuterium gas and another different species of gas may be injected. For example, a mixture of deuterium gas and helium gas increases the solid-dissolution rate of deuterium atoms (Figure 9), and therefore, this mixture gas is preferably used. However, a mixture of deuterium gas and neon inhibits solid-dissolution of deuterium atoms, and therefore, this mixture gas is not preferably used. As the different species of gas used in the mixture gas, a material having an atomic diameter similar to that of a deuterium atom is considered to be desirable.

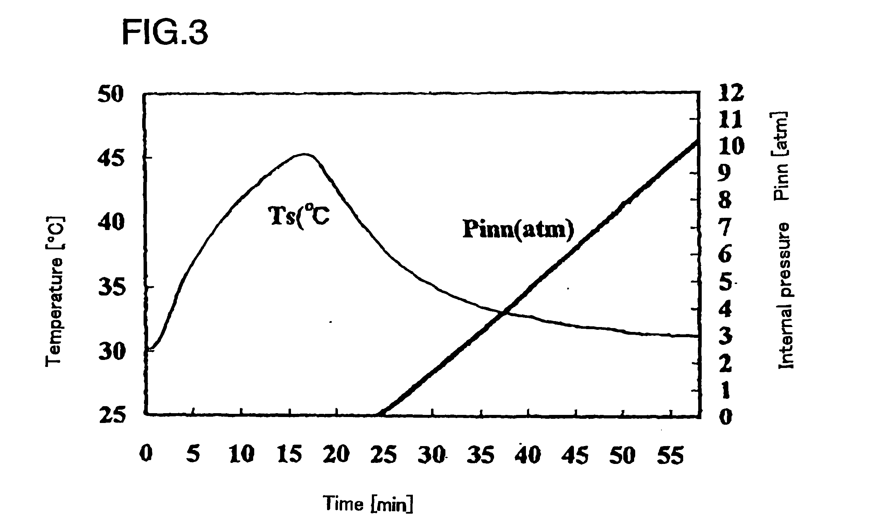

Figure **3** shows changes over time in heat generated by solid-dissolving a mixture gas of deuterium gas and helium gas into the $ZrO_2 \cdot Pd$ particle, and changes over time in the internal pressure of the reaction furnace **201**. In Figure **3,** a vertical axis (left) represents temperature (°C), another vertical axis (right) represents the internal pressure (atm) of the reaction furnace **201,** and the horizontal axis represents time (min).

When a mixture gas of deuterium gas and helium gas is solid-dissolved into the $ZrO_2 \cdot Pd$ particle, the temperature of an outer wall surface of the reaction furnace **201** is increased up to a maximum of 45°C due to chemical reaction heat generated by the solid-dissolution. It takes 55 min to 60 min for the internal pressure of the reaction furnace **201** to reach 10 atm.

Note that the temperature of the outer wall surface of the reaction furnace **201** was measured. This is because the internal pressure of the reaction furnace **201** may be increased to a very high level, and in this case, the temperature of the inside of the reaction furnace **201** cannot be measured.

Operation III: the ultrasonic wave transfer medium **210** was injected via the transfer medium injection port **204** into the reaction furnace **201** so that the ultrasonic wave vibrator **207** was sufficiently immersed in the reaction furnace **201.** Examples of the ultrasonic transfer medium **210** include water ($H_2O$), water vapor, and commercially available heavy water ($D_2O$).

Operation IV: ultrasonic wave energy was applied from an edge surface of the ultrasonic wave vibrator **207** via the ultrasonic wave transfer medium **210** to the ultrahigh-density deuterated nanoparticle.

The intensity of the ultrasonic wave is, for example, 300 watt and 19 kHz. Note that the intensity of the ultrasonic wave is not limited to 300 watt and 19 kHz as long as the intensity is sufficient that a plurality of deuterium atoms solid-dissolved in the ultrahigh-density deuterated nanopartiole react with one another.

As an element used in the nuclear fusion reaction, elements having an atomic number of 4 or less and an isotope thereof can be used. Taking ease of handling into consideration, preferably, deuterium (D) is used singly, or alternatively, a combination of deuterium (D) and hydrogen (H) or a combination of deuterium (D) and tritium (T) is used.

By applying energy to the ultrahigh-density deuteratednanoparticle, a plurality of deuterium atoms react with one another to generate heat and helium molecules. The reaction is represented by:

$$^{2}D + {}^{2}D = {}^{4}He + \text{lattice energy (23.8 MeV)}.$$

The reaction does not generate a neutron and is a mild nuclear fusion reaction, and therefore, is desirably better than a DD nuclear fusion reaction described below. Therefore, the ultrahigh-density deuterated nanoparticle of the present invention is recommended to be used for a nuclear fusion reaction in terms of the conservation of the environment. The well-known DD nuclear fusion reaction which causes a radical impact of deuterium atoms to generate T and neutrons is extremely dangerous, and therefore, is not desirable in terms of industrial applicability and conservation of the environment.

The reaction of deuterium generates high-temperature and high-pressure gas and helium gas in the reaction furnace **201**. The high-temperature and high-pressure gas and the helium gas are removed via the gas outlet **205.**

The high-temperature and high-pressure gas is, for example, transferred to a turbine generator, in which the gas is in turn used as a drive source for driving the turbine generator. The high-temperature and high-pressure gas is transferred to the turbine generator in the form of jet gas. Therefore, the generated heat can be used to drive the turbine generator without being converted to vapor or potential energy. Further, the generated heat can be used as alternative energy in place of water power, thermal power, wind power, coal, petroleum, nuclear power and the like, or clean energy which allows reproduction and conservation of the Earth's environment, in all fields.

Impurity gas which is mixed in helium generated in the reaction furnace **201** liquefies or solidifies at about 50 K. Therefore, by cooling the impurity gas at a cryogenic temperature to be liquefied or solidified, it is possible to remove the impurity gas from helium. As a result, it is possible to produce and collect helium gas in large quantities. Alternatively, helium can be collected by causing the impurity to be absorbed in a purification column. Helium produced according to the present invention can be used in well-known applications, such as welding protection gas, filling gas for aerostat, gas enclosed in a discharge tube, artificial air for diving, and the like. Since helium gas can be collected in large quantities and with low cost, development of novel applications of helium can be promoted.

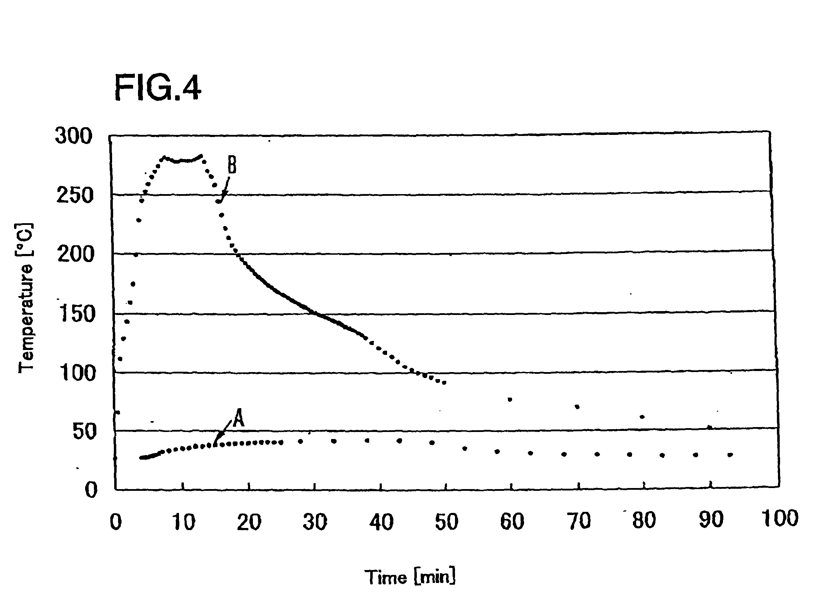

Figure **4** shows the comparison between heat generation before applying ultrasonic wave to the ultrahigh-density deuterated nanoparticle and heat generation during application of ultrasonic wave. In Figure **4**, the vertical axis represents temperature (°C) and the horizontal axis represents time (min).

In Figure **4,** a curve A shows changes over time in heat generated when deuterium atoms are solid-dissolved in the $ZrO_2 \cdot Pd$ particle (before a nuclear fusion reaction), and a curve B shows changes over time in heat generated when the ultrasonic wave is applied to an ultrahigh-density deuterated nanoparticle produced by solid-dissolving deuterium atoms into the $ZrO_2 \cdot Pd$ particle (during a nuclear fusion reaction). Note that the temperature of the outer wall surface of the reaction furnace **201** was measured. This is because the temperature of the inside of the reaction furnace **201** is too high to be measured.

When deuterium atoms were solid-dissolved into the $ZrO_2 \cdot Pd$ particle, chemical reaction heat (about 40 kJ/mol) was generated, so that a slight increase in temperature was detected at the outer wall surface of the reaction furnace **201** (the curve **A** in Figure **4).**

When the ultrasonic wave is applied to an ultrahigh-density deuterated nanoparticle produced by solid-dissolving deuterium atoms into the $ZrO_2 \cdot Pd$ particle (during a nuclear fusion reaction), the temperature of the outer wall surface of the reaction furnace **201** rapidly increased, so that specific temperature characteristics were observed (the curve B in Figure 4). The rapid increase in the temperature of the outer wall surface of the reaction furnace **201** indicates that a nuclear fusion reaction continued for about 10 minutes. Most of the heavy water ($D_2O$) which is the ultrasonic wave transfer medium **210** in the reaction furnace **201** was vaporized, and was decomposed into $D_2$ or D. The inside of the reaction furnace **201** is considered to have high temperature and high pressure, indicating a tremendous nuclear fusion reaction.

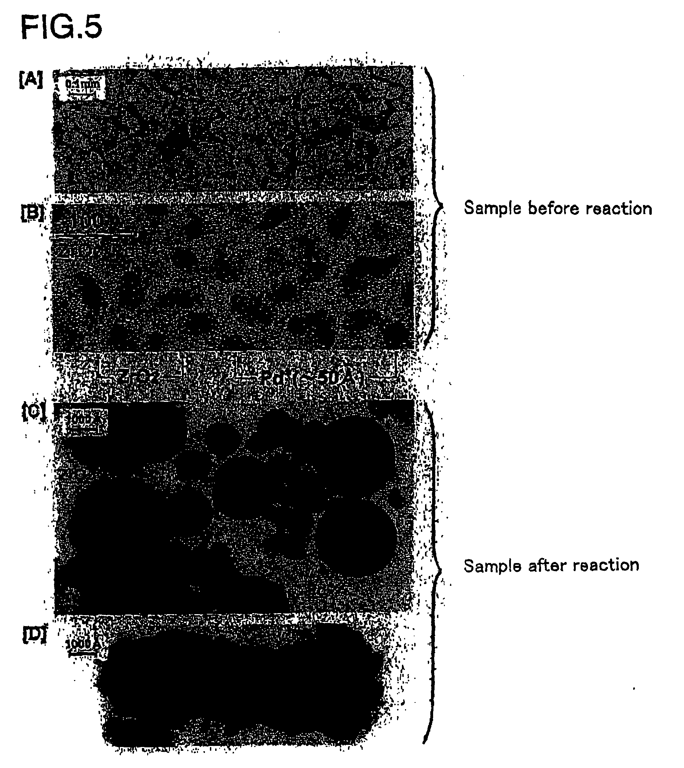

Figure **5** shows comparison of an ultrahigh-density deuterated nanoparticle sample produced by solid-dissolving deuterium atoms into the $ZrO_2 \cdot Pd$ particle before and after applying the ultrasonic wave to the sample (before and after a nuclear fusion reaction).

In Figure **5**, [A] and [B] show the ultrahigh-density deuterated nanopartiole sample before applying the ultrasonic wave (before a nuclear fusion reaction), and [C] and [D] show the ultrahigh-density deuterated nanoparticle sample after applying the ultrasonic wave (before a nuclear fusion reaction).

As can be seen from [C] and [D] of Figure **5**, zirconia ($ZrO_2$) contained in the ultrahigh-density deuterated nanoparticle is melted due to high temperature after application of the ultrasonic wave. The temperature of the inside of the reaction furnace **201** is too high to measure. However, since the melting point of zirconia ($ZrO_2$) is about 1850°C, the temperature of the inside of the reaction furnace **201** is considered to be about 1850°C or more.

Based on the above-described finding, we determined that the resultant nuclear fusion reaction is $^2D + ^2D = ^4He +$ lattice energy (23.8 MeV).

Note that, when the ultrasonic wave was applied (operations III and IV) to the ultrahigh-density deuterated nanoparticle produced by solid-dissolving deuterium atoms to an atom number ratio of less than 200% (operation II), it was confirmed that the heavy water ($D_2O$) which is the ultrasonic wave transfer medium **210** in the reaction furnace **201** was not vaporized and substantially remained in the reaction furnace **201.**

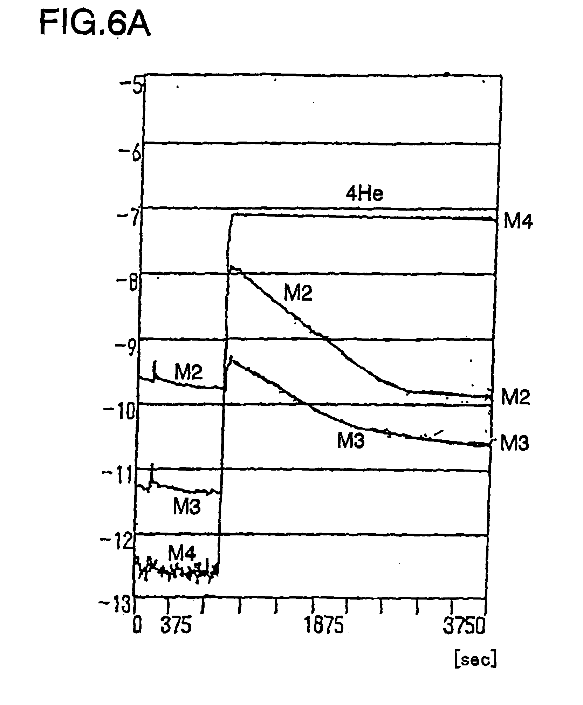

Figure **6A** shows the result of analysis of gas generated when the ultrasonic wave was applied to the ultrahigh-density deuterated nanoparticle produced by solid-dissolving deuterium atoms into the $ZrO_2 \cdot Pd$ particle (during a nuclear fusion reaction). In Figure **6A,** the vertical axis represents pressure (ppm) and the horizontal axis represents time (sec). Gas generated in the reaction furnace **201** was analyzed using a Quadrupole Mass Spectrometer (QMS).

In Figure **6A,** M2 indicates D, M3 indicates DH, and M4 indicates He. As can be seen, a nuclear fusion reaction caused deuterium atoms solid-dissolved in the ultrahigh-density deuterated nanoparticle to react with one another to generate a large quantity of helium (He) gas.

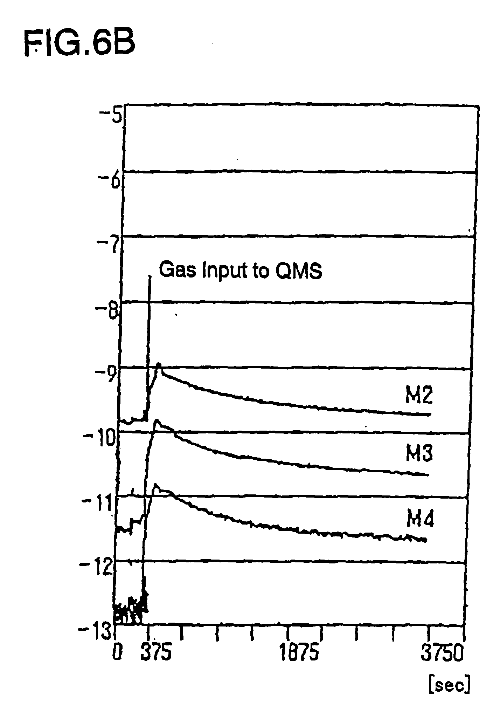

Figure **6B** shows the result of analysis of gas generated after the ultrasonic wave was applied to the ultrahigh-density deuterated nanoparticle produced by solid-dissolving deuterium atoms into the $ZrO_2 \cdot Pd$ particle (after a nuclear fusion reaction). In Figure 6B, the vertical axis represents pressure (ppm) and the horizontal axis represents time (sec).

After the reaction, the sample was removed from the reaction furnace **201.** The sample was heated at 1,300°C in a sample container of the QMS. Gas thus generated was analyzed using the QMS.

In Figure **6B**, **M2** indicates D, **M3** Indicates DH, and M4 indicates $D_2$. As can be seen, after the nuclear fusion reaction, substantially no He or D remained in the ultrahigh-density deuterated nanoparticle.

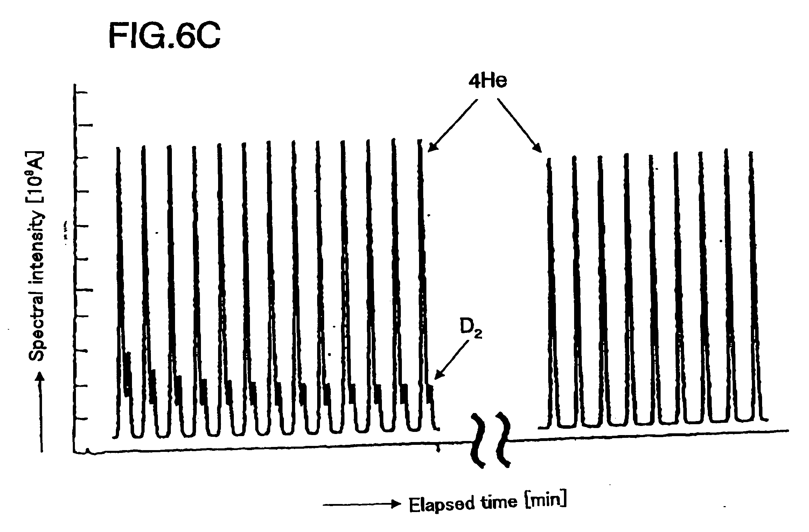

Figure **6C** shows spectra of M4. In Figure **6C,** the vertical axis represents an intensity of the spectra ($10^{-9}$ A) and the horizontal axis represents elapsed time (min). As can be seen from Figure **6C,** $D_2$ disappeared over time, while most He remained.

Worthy of special note with reference to Figures **6A, 6B** and **6C** is that the quantity of M4 (=He) produced during the nuclear fusion reaction (Figure **6A**) was large by an order of magnitude or more, and most of the deuterium atoms solid-dissolved in the ultrahigh-density deuterated nanoparticle reacted with one another to generate helium gas. In contrast, substantially no He or D existed in the ultrahigh-density deuterated nanoparticle after the nuclear fusion reaction (Figure **6B).**

As described above , a larger number of deuterium atoms per unit particle can be solid-dissolved in the metal nano-ultrafine particle than in bulk metal particles. Therefore, the distance between deuterium atoms solid-dissolved in the metal nano-ultrafine particle is smaller than the distance between deuterium atoms solid-dissolved in the bulk metal particle. As a result, it is possible to apply a lower level of energy to the ultrahigh-density deuterated nanoparticle to cause a heat generation reaction at low temperature and for a long duration of time as compared to energy applied to a particle comprising the bulk metal particle and a plurality of deuterium atoms.

3. Structure of hydrogen condensate **300**

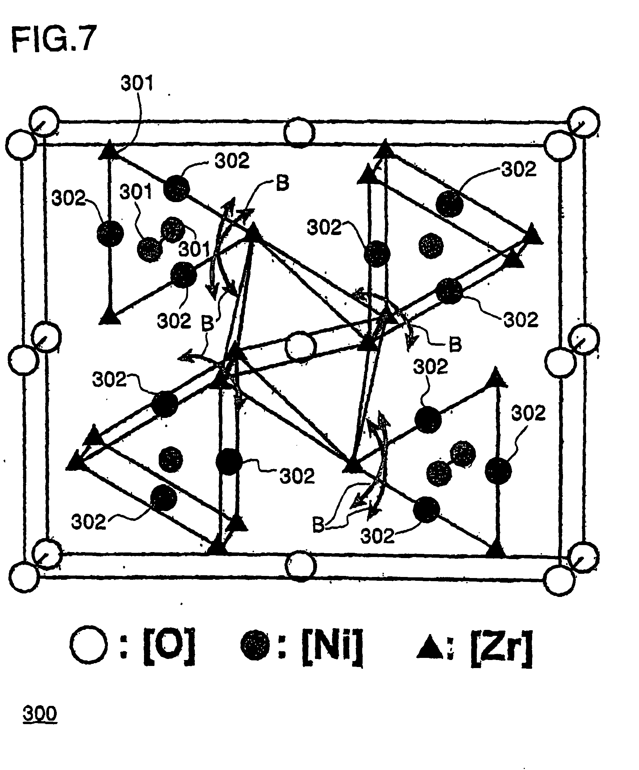

Figure **7** schematically shows an exemplary structure of a hydrogen condensate **300.**

The hydrogen condensate **300** comprises a zirconium-nickel alloy composite (host) and a plurality of hydrogen isotope atoms (guests) **302** solid-dissolved among a plurality of metal atoms **301** contained in the zirconium-nickel alloy composite. A larger quantity of hydrogen isotope atoms can be solid-dissolved in the zirconium-nickel alloy composite than in bulk metal particles. This is because the bond between metal atoms in the zirconium-nickel alloy composite is more elastic than the bond between metal atoms in the bulk metal particle, and therefore, a lower level of pressure needs to be applied to the zirconium-nickel alloy composite and hydrogen isotope atoms to solid-dissolve the hydrogen isotope atoms, than the level of pressure applied to the bulk metal particle and hydrogen isotope atoms to solid-dissolve the hydrogen isotope atoms.

In Figure **7**, arrow **B** indicates the elasticity of the bond between metal atoms in the zirconium-nickel alloy composite.

The hydrogen condensate **300** comprises a Zr-Pd-Ni particle ($Zr_3NiO \cdot Pd$ particle) and a plurality of deuterium atoms solid-dissolved among a plurality of metal atoms contained in the Zr-Pd-Ni particle ($Zr_3NiO \cdot Pd$ particle), for example.

The details of a production method of the Zr-Pd-Ni particle are described in, for example, Japanese Patent Application No. 2003-340285 (filed on September 30, 2003).

Note that the hosts and/or guests described in 1.1 to 1.4 above can be used as the host and/or guest of the hydrogen condensate **300.**

The zirconium-nickel alloy composite may be, for example, a $Zr_3NiO \cdot Pd$ particle or $Zr_4Ni_2O_x$(0.3-1).

Note that metal alloy composites other than the zirconium-nickel alloy composite can be used. The hydrogen condensate **300** may comprise a metal alloy composite (host) and a plurality of hydrogen isotope atoms (guests) solid-dissolved among a plurality of metal atoms contained in the metal alloy composite. In this case, the plurality of metal atoms contained in the metal alloy composite are at least two metal atoms selected from the metal group consisting of zirconium, titanium, nickel, palladium, magnesium, and boron. The metal alloy composite is, for example, an oxide of a metal alloy.

4. Method of generating heat using hydrogen condensate **300**

As an apparatus for generating heat using the hydrogen condensate 300, the heat generation apparatus **200** of Figure 2 is used, for example. The heat generation apparatus **200** is used to produce the hydrogen condensate **300** by solid-dissolving hydrogen isotope atoms **302** among a plurality of metal atoms **301** contained in a zirconium-nickel alloy composite. The heat generation apparatus **200** is also used to generate heat using the hydrogen condensate **300.**

By applying energy to the hydrogen condensate **300,** a plurality of hydrogen isotope atoms react with one another to generate heat. For example, by applying energy to the hydrogen condensate **300** containing a plurality of deuterium atoms, the deuterium atoms react with one another to generate helium molecules as well as heat. The reaction is represented by:

$$^2D + {}^2D = {}^4He + \text{lattice energy (23.8 MeV)}.$$

The reaction does not generate a neutron and is a mild nuclear fusion reaction, and therefore, is desirably better than a DD nuclear fusion reaction described below. Therefore, the hydrogen condensate **300** of the present invention is recommended to be used for a nuclear fusion reaction in terms of the conservation of the environment. The well-known DD nuclear fusion reaction which causes a radical impact of deuterium atoms to generate T and neutrons is extremely dangerous, and therefore, is not desirable in terms of industrial applicability and conservation of the environment.

As described in **2**. above, the reaction of deuterium generates high-temperature and high-pressure gas and helium gas in the reaction furnace **201**.

<Example 2>

A zirconium-nickel alloy composite (including a $Zr_3NiO \cdot Pd$ particle, $Zr_4Ni_2O_x$(0.3-1)) was produced. The zirconium-nickel alloy composite was placed in the reaction furnace **201,** and thereafter, deuterium gas ($D_2$ gas) was injected into the reaction furnace **201.** A pressure was applied to the zirconium-nickel alloy composite and the deuterium gas ($D_2$ gas) to cause the zirconium-nickel alloy composite to absorb deuterium atoms, thereby preparing a nuclear fusion reaction material (ultrahigh-density deuterated metal alloy). Thereafter, impact energy created by activating the ultrasonic wave vibrator **207** was applied via an ultrasonic wave transfer medium ($D_2O$) to the ultrahigh-density deuterated metal alloy, thereby causing a nuclear fusion reaction.

A procedure for operating the heat generation apparatus **300** is similar to that described in <Example 1> and will not be explained.

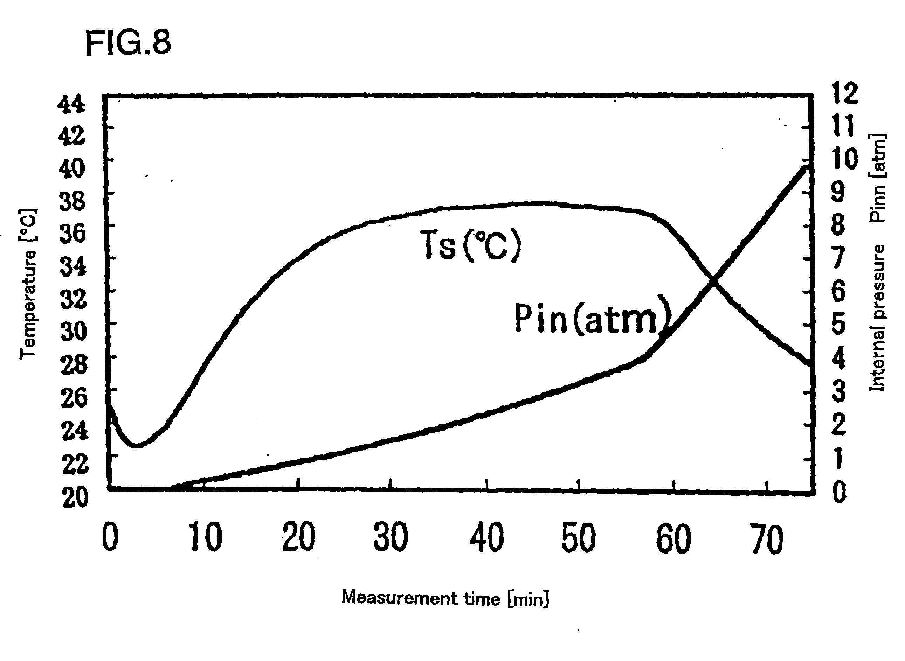

Figure **8** shows changes over time in heat generated by solid-dissolving deuterium gas into the $Zr_3NiO \cdot Pd$ particle, and changes over time in the internal pressure of the reaction furnace **201**. In Figure **8,** a vertical axis (left) represents temperature (°C), another vertical axis (right) represents the internal pressure (atm) of the reaction furnace **201**, and the horizontal axis represents time (min).

It takes 70 min or more for the internal pressure of the reaction furnace **201** to reach **10** atm. When a mixture gas of deuterium gas and helium gas is solid-dissolved into the $ZrO_2 \cdot Pd$ particle, it takes 55 min to 60 min for the internal pressure of the reaction furnace **201** to reach 10 atm (see Figure **3).** Therefore, it will be understood that a larger number of deuterium atoms are solid-dissolved in the $Zr_3NiO \cdot Pd$ particle than in the $ZrO_2 \cdot Pd$ particle.

Figure **9** shows that it is more difficult for deuterium atoms to be solid-dissolved in the $Zr_3NiO \cdot Pd$ particle when a mixture gas of deuterium gas and helium gas is used than when deuterium gas is used. In Figure **9**, a vertical axis (left) represents temperature (°C), another vertical axis (right) represents the internal pressure (atm) of the reaction furnace **201,** and the horizontal axis represents time (min).

A curve $P^*_{He}$ indicates changes over time in the internal pressure of the reaction furnace **201** when a mixture gas of deuterium gas and helium gas is solid-dissolved into the $Zr_3NiO \cdot Pd$ particle. A curve $P^*$ indicates changes over time in the internal pressure of the reaction furnace **201** when deuterium gas is solid-dissolved into the $Zr_3NiO \cdot Pd$ particle. The rising of the curve $P^*_{He}$ is earlier than the rising of the curve $P^*$. Therefore, it will be understood that it is more difficult for deuterium atoms to be solid-dissolved in the $Zr_3NiO \cdot Pd$ particle when a mixture gas of deuterium gas and helium gas is used than when deuterium gas is used.

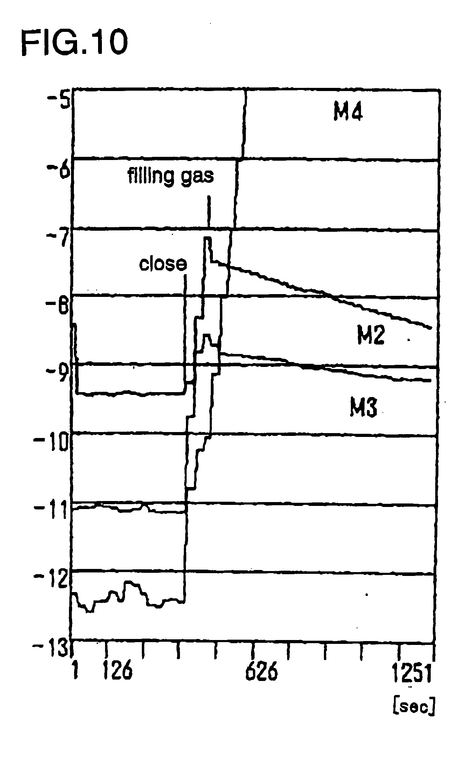

Figure **10** shows the result of analysis of gas generated when the ultrasonic wave was applied to the deuterium condensate produced by solid-dissolving deuterium atoms into the $Zr_3NiO \cdot Pd$ particle (during a nuclear fusion reaction). In Figure **10,** the vertical axis represents pressure (ppm) and the horizontal axis represents time (sec). Gas generated in the reaction furnace **201** was analyzed using the QMS.

In Figure **10, M2** indicates D, **M3** indicates DH, and M4 indicates He. As can be seen, a nuclear fusion reaction caused deuterium atoms solid-dissolved in the deuterium condensate to react with one another to generate a large quantity of helium (He) gas.

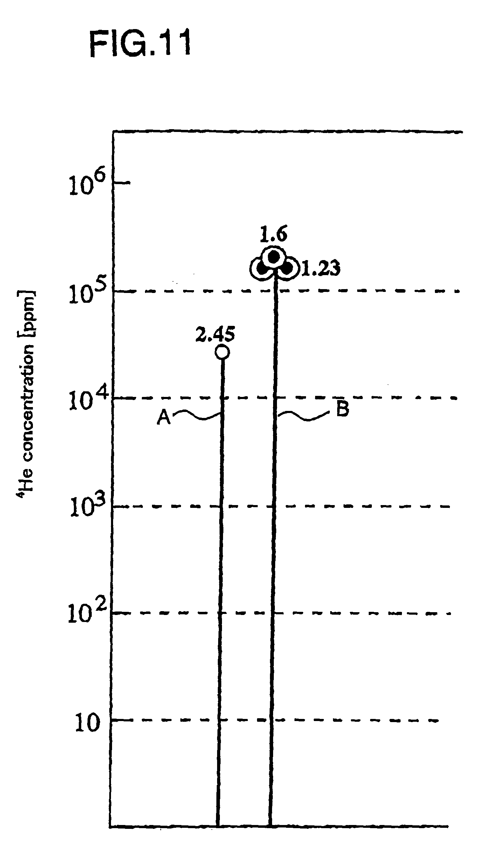

Figure **11** shows that the quantity of helium generated by applying the ultrasonic wave to the deuterium condensate produced by solid-dissolving deuterium atoms into the $Zr_3NiO \cdot Pd$ particle is larger than the quantity of helium generated by applying the ultrasonic wave to the deuterium condensate produced by solid-dissolving deuterium atoms into the $ZrO_2 \cdot Pd$ particle. In Figure **11**, the vertical axis represents $^4He$ concentration (ppm). The length of a line A indicates the quantity of helium ($2.45 \times 10^4$ ppm) generated by applying the ultrasonic wave to the deuterium condensate produced by solid-dissolving deuterium atoms into the $ZrO_2 \cdot Pd$ particle. The length of a line B indicates the quantity of helium ($1.23 \times 10^5$ ppm to $1.6 \times 10^5$ ppm) generated by applying the ultrasonic wave to the deuterium condensate produced by solid-dissolving deuterium atoms into the $Zr_3NiO \cdot Pd$ particle.

As described above, a larger number of deuterium atoms per unit particle can be solid-dissolved in the zirconium-nickel alloy composite than in bulk metal particles. Therefore, the distance between deuterium atoms solid-dissolved in the zirconium-nickel alloy composite is smaller than the distance between deuterium atoms solid-dissolved in the bulk metal particle. As a result, it is possible to apply a lower level of energy to the ultrahigh-density deuterated zirconium-nickel alloy composite to cause a heat generation reaction at low temperature and for a long duration as compared to energy applied to a particle comprising the bulk metal particle and a plurality of deuterium atoms.

**INDUSTRIAL APPLICABILITY**

The present invention provides a hydrogen condensate useful as a fuel and a method of generating heat using the hydrogen condensate. The present invention makes it possible to produce energy which is safe and whose resource is guaranteed to be inexhaustible and which is therefore desired by the human race, and helium gas which is useful and whose abundance is very small. Further, the present invention provides an immeasurable contribution to development of new science and technology in a wide variety of fields, such as energy science and technology, material science and technology, refrigerant technology, aeronautical engineering and the like, and further, any activities for the continuation of the human race, and the conservation of the Earth's environment.

**Claims**

1. A method of generating heat using a hydrogen oondensate,
     wherein the hydrogen condensate comprises a metal nano-ultrafine particle containing a plurality of metal atoms and a plurality of hydrogen isotope atoms solid-dissolved among the plurality of metal atoms, and at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms,

the heat generation method comprising:

applying energy to the hydrogen condensate; and

generating heat by causing the at least two hydrogen isotope atoms to react with each other due to the energy.

2. A method according to claim 1, wherein the plurality of metal atoms are metal atoms of at least one species selected from the group consisting of palladium, titanium, zirconium, silver, iron, nickel, copper, and zinc.

3. A method of generating heat using a hydrogen condensate,

wherein the hydrogen condensate comprises a metal alloy composite containing a plurality of metal atoms and a plurality of hydrogen isotope atoms solid-dissolved among the plurality of metal atoms, and at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms,

the heat generation method comprising:

applying energy to the hydrogen condensate; and

generating heat by causing the at least two hydrogen isotope atoms to react with each other due to the energy.

4. A method according to claim 1 or 3, wherein the energy is generated based on at least one of ultrasonic wave, strong magnetic field, high pressure, laser, laser explosive flux-compression, high-density electron beam, high-density current, discharge, and chemical reaction.

5. A method according to claim 1 or 3, wherein in the step of generating heat, the at least two hydrogen isotope atoms are reacted with each other to generate a helium molecule in addition to the heat.

6. A hydrogen condensate, comprising:

a metal nano-ultrafine particle containing a plurality of metal atoms; and
a plurality of hydrogen isotope atoms solid-dissolved among the plurality of metal atoms,

wherein at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms.

7. A hydrogen condensate according to claim 6, wherein the plurality of metal atoms are metal atoms of at least one species selected from the group consisting of palladium, titanium, zirconium, silver, iron, nickel, copper, and zinc.

8. A hydrogen condensate, comprising:

a metal alloy composite containing a plurality of metal atoms; and
a plurality of hydrogen isotope atoms solid-dissolved among the plurality of metal atoms,

wherein at least two of the plurality of hydrogen isotope atoms are condensed so that an inter-atomic nuclear distance between the two hydrogen isotope atoms is smaller than or equal to an internuclear spacing of a molecule consisting of the two hydrogen isotope atoms.

# FIG.1

○ 20-face site

● 14-face site

100

# FIG.2

Ultrasonic wave generation means — 206

204

203

202

207

210

201

100 (101)

205

Turbine generator

200

# FIG.3

# FIG.4

# FIG.5

[A]

[B]

Sample before reaction

[C]

Sample after reaction

[D]

FIG.6A

# FIG.6B

EP 1 551 032 A1

FIG.6C

20

FIG.7

◯ : [O]　　◉ : [Ni]　　▲ : [Zr]

300

# FIG.8

FIG.9

# FIG.10

## FIG.11

## INTERNATIONAL SEARCH REPORT

| International application No. |
|---|
| PCT/JP03/13095 |

**A. CLASSIFICATION OF SUBJECT MATTER**
Int.Cl$^7$ G21B1/00, C01B3/00, B01J20/06

According to International Patent Classification (IPC) or to both national classification and IPC

**B. FIELDS SEARCHED**

Minimum documentation searched (classification system followed by classification symbols)
Int.Cl$^7$ G21B1/00, C01B3/00, B01J20/06

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-222173 A (Yoshiaki ARATA),<br>12 August, 1994 (12.08.94),<br>The column of operation<br>(Family: none) | 1-8 |
| X | JP 8-75882 A (Yoshiaki ARATA),<br>22 March, 1996 (22.03.96),<br>The column of operation<br>(Family: none) | 1-8 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 November, 2003 (19.11.03) | 02 December, 2003 (02.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)